# EUROPEAN PATENT APPLICATION

(11) **EP 1 480 136 A2**
(43) Date of publication of application: **24.11.2004**
(21) Application number: 04012200.4
(22) Date of filing: 24.05.2004
(51) Int. Cl.: G06F 17/30

(54) **System and method of visual grouping of elements in a diagram**

(30) Priority: 22.05.2003 CA 2429284
(71) Applicant: Cognos Incorporated, Ottawa, Ontario K1G 4k9 (CA)
(72) Inventor: Potter, Charles Mike, Nepean, Ontario K2G 6H4 (CA); McAvoy, James Ivan, Ottawa, Ontario K2G 6P1 (CA)
(74) Representative: HOEGER, STELLRECHT & PARTNER Patentanwälte

(57) **Abstract**

A system of displaying and modifying a graph representation of a data model is provided. The system comprises a display unit for displaying a window, a rendering unit for rendering a graph onto the window, an event notification unit for providing notification to the window in response to an event, and a graph information repository for storing elements of the graph and interrelation information of the elements.

## Description

### FIELD OF THE INVENTION

The invention relates to a system and method of visual grouping of elements in a diagram.

### BACKGROUND OF THE INVENTION

Graph drawing technology is known in the software industry. A typical graph image scenario is as follows:

Let G=<V,E> be a graph where V is a set of vertices (i.e., nodes) and E is a set of edges or links that connect two vertices. The semantic meaning of the graph G can be to represent some data topology, such as a Relational Database, where each node represents a relation (i.e., table) and an edge represents a join between two relations.

Usually, databases contain many tables and have complex join topology. The graph image or visual representation of this data topology may be difficult to comprehend. To overcome the visual complexity and increase understanding, one can employ some type of grouping or clustering strategy by dividing the graph into smaller isolated sub-graphs. Each sub-graph can be also divided recursively and have a graph image associated with it. Each image of the sub-graph could increase the observer's comprehension.

The problem with this strategy is that some contextual information is lost. The observer does not know how a sub-graph is related to another sub-graph or its parent context.

In the software industry, there are some graph-drawing products that have a concept of nested graphs, which layout and draw graphs. They have a navigation feature that allows users to nest graphs but only allows one graph drawing to be displayed at a time. Furthermore, there is no indication that users can create nested graphs dynamically.

There also exists some data modelling software that display graphs to represent data topologies. However, such software products display the whole data topology onto one graph image and do not provide a mechanism to allow users sub-divide the graph.

With current graph-drawing products that allow for sub-division of a graph, the image of a graph is not modified, but replaced with another image containing the sub-graph. When such a replacement occurs, the user loses context between the sub-graph and the parent graph.

Thus, there is a need in the art to overcome the visual complexity of large graph drawings and to preserve information that the graph drawing represents in the domain of data modelling.

### SUMMARY OF THE INVENTION

The invention relates to a system and method of grouping elements in a diagram. The diagram may be a graph comprised of elements and nodes. If a user manipulates the graph, the changes to the graph topology may be updated dynamically.

In accordance with an embodiment of the present invention, there is provided a system for displaying and modifying a graph representation of a data model. The system comprises a display unit for displaying a window, a rendering unit for rendering a graph onto the window, an event notification unit for providing notification to the window in response to an event, and a graph information repository for storing elements of the graph and interrelation information of the elements.

In accordance with another embodiment of the present invention, there is provided a system for displaying and modifying a graph representation of a data model. The system comprises a visual graph control module for providing behaviour features, an extended visual graph control module for providing extended behaviour features, a host application view control module for managing the visual graph control module, and an engine and metadata module for providing application logic and semantics.

In accordance with another embodiment of the present invention, there is provided a method of rendering a data model topology. The method comprises the steps of creating a group of nodes in a graph of a data model topology, storing the group as a group graph in a graph informafion repository, and updating the graph of the data model topology.

In accordance with another embodiment of the present invention, there is provided a computer data signal embodied in a carrier wave and representing sequences of instructions which, when executed by a processor, cause the processor to perform a method of rendering a data model topology. The method comprises the steps of obtaining a selection of nodes in the graph, associating the selection of nodes as the group graph, and treating the group graph as a node in the data model topology graph.

In accordance with another embodiment of the present invention, there is provided a computer-readable medium having computer readable code embodied therein for use in the execution in a computer of a method of rendering a data model topology. The method comprises the steps of obtaining a selection of nodes in the graph, associating the selection of nodes as the group graph, and treating the group graph as a node in the data model topology graph.

In accordance with another embodiment of the present invention, there is provided a computer program product for use in the execution in a computer of a system for displaying and modifying a graph representation of a data model. The computer program product comprises a display unit for displaying a window, a rendering unit for rendering a graph onto the window, an event notification unit for providing notification to the window in response to an event, and a graph information repository for storing elements of the graph and interrelation information of the elements.

### BRIEF DESCRIPTION OF THE DRAWINGS

Figure 1 shows an example of a diagram-view system, in accordance with an embodiment of the present invention.
Figure 2 shows another example of a diagram-view system, in accordance with an embodiment of the present invention.
Figure 3 shows another example of a diagram view system, in accordance with an embodiment of the present invention.
Figure 4 shows an example of an extended visual graph control module, in accordance with the diagram-view system.
Figure 5 shows an example of a graph of a data model used by the diagram-view system.
Figure 6 shows a flowchart of a method of creating a group in a graph, in accordance with an embodiment of the invention.
Figure 7 shows a group of a graph, in accordance with a diagram-view system.
Figure 8 shows a flowchart of a method of visually grouping elements in a diagram, in accordance with the diagram-view system.
Figure 9 shows a flowchart of another method of creating a group in a graph, in accordance with an embodiment of the invention.
Figure 10 shows a graph with a collapsed group.
Figure 11 shows an example of an image from the diagram-view system displaying a node that represents a collapsed group.
Figure 12 shows an example of an image from the diagram-view system showing a group that is expanded.
Figure 13 shows a diagram-view image of a graph containing groups and nested groups.
Figure 14 shows a diagram-view image showing a graph with collapsed and expanded groups.
Figure 15 shows another example of a diagram-view image showing a graph with collapsed and expanded groups.
Figure 16 is a flowchart showing a method of rendering large data model topologies, in accordance with the diagram-view system.

### DETAILED DESCRIPTION OF THE PREFERRED EMBODIMENTS

One embodiment of the present invention relates to the domain of data modelling and provides a mechanism to sub-divide the data topology dynamically without a loss of information.

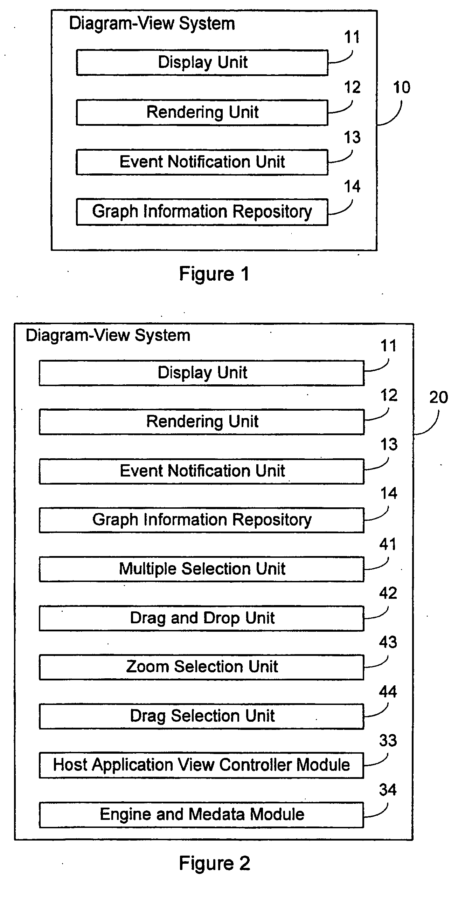

For example, an application may be used to model data to produce metadata. The application may be an architecture based upon a Model-View-Controller paradigm. One component of such an application is a diagram-view system for displaying and modifying a graph representation of the data model. Figure 1 shows an example of a diagram-view system 10, in accordance with an embodiment of the present invention.

The diagram-view system 10 comprises a display unit 11 for displaying a window on a user's computer system, a rendering unit 12 for rendering a graph drawing onto the window, an event notification unit 13 for providing notification to a parent window when an event occurs in the window, and a graph information repository 14 for containing lexical and syntactical information of a graph, i.e., the graph information repository 14 stores information relating to the interrelations of graph elements. The graph information repository 14 may be a memory location in a computer system. Preferably, the graph information repository 14 contains no semantic knowledge of the graph. For example, in a relational database context, the diagram-view system 10 does not know that a node is representing a relational database table (semantic information) but does comprise rules to ensure that the graph is well formed according to the mathematical definition of the graph. Preferably, these graph definition rules are stored in the graph information repository 14. An example of graph element interrelation information is provided below.

The diagram-view system 10 may be implemented as a separate library and can be incorporated into any context or host application. An application programming interface. (API) may be incorporated with the diagram view system 10. Components may be added or removed from the diagram-view system 10, such as a group creation unit. Figure 2 shows another example of a diagram-view system 20 comprising additional components. These other components are described below. Components may be added or removed from the diagram-view system 20.

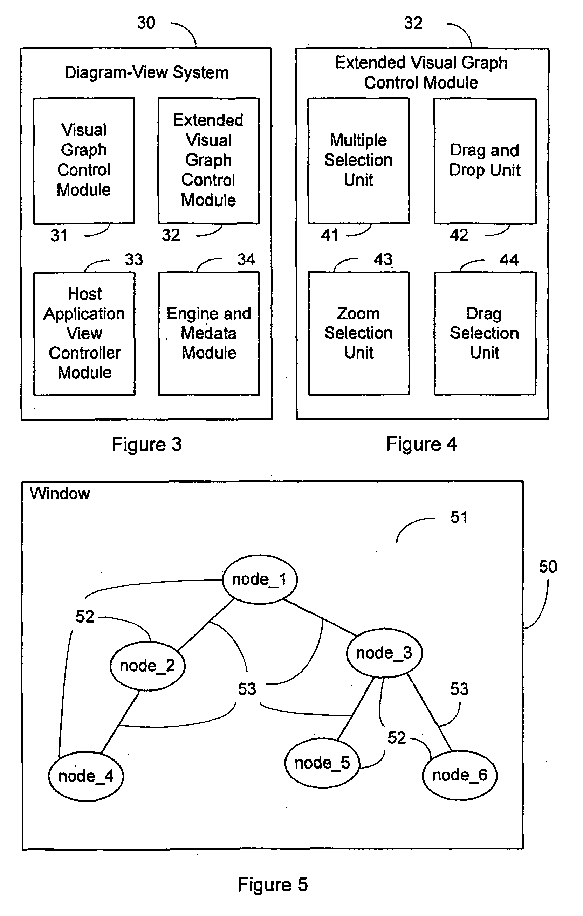

Figure 3 shows another example of a diagram-view system 30, in accordance with an embodiment of the present invention. The diagram-view system 13 comprises a visual graph control module 31, an extended visual graph control module 32, a host application view controller module 34, and an engine and metadata module 35. In this embodiment, a graph may represent a relational database topology, where the nodes represent relations (i.e., tables) and the edges represent associations or joins between tables.

The visual graph control module 31 provides behaviour features of the diagram-view system 30. The visual graph control module 31 comprises a display unit 11, a rendering unit 12, an event notification unit 13 and a graph information repository 14 as described in Figure 1. An example of a behaviour feature is expanding and collapsing a graph. The remainder of this description will refer to a diagram-view system 30. Modifications to the description may be made such that the description applies to the diagram-view systems 10 and/or 20.

The extended visual graph control module 32 provides extended behaviour or features that are not provided by the visual graph control module 31. Figure 4 shows an example of an extended visual graph control module 32, in accordance with the diagram-view system 30. The extended visual graph control module 32 comprises a multiple selection unit 41 for selecting multiple nodes of a graph, a drag and drop unit 42 for dragging a selected graph items, such as nodes and edges, in a window and dropping the selected graph items in another location of the window, a zoom selection unit 43 for scaling coordinates of a graph, and a drag selection unit 44 for selecting multiple items of a graph.

Behaviour units or features may be added to, or removed from, the extended visual graph control module 32. For example a behaviour unit that handles the graph layout may be added to the extended visual graph control module 32. Such a graph layout unit allows a user to select a node to become the root node and the graph is then reorganized accordingly. The graph layout unit also comprises layout algorithms. For example, one layout algorithm may lay out the graph as a tree, while another layout algorithm may lay out the graph as a star (radial layout). Both algorithms would use a root node, which the user can specify or the graph layout unit can select.

Selecting and creating a group are two separate operations. Single selection is provided in the visual graph control module 31. The extended visual graph control module 32 enhances this ability for multiple selections. Selectable entities could be a graph (i.e., a group), an edge, nodes, or columns inside a table node. Usually users select nodes to create a group and the edges are added to the group if required. The creation of a group will be dascribed below.

The drag and drop unit 42 is used for dragging a selected graph component in a window and dropping the selected graph component in another location of the window. In one embodiment of the diagram-view system 30, only nodes and groups are dragged and dropped. However, in a different embodiment, edges could be drag and drop enabled. It depends on the model semantics the visual graph control is representing. Metadata may be created to define data models where edges are dragged and dropped.

The zoom selection unit 43 is used for scaling coordinates in a graph. Scaling is a matrix operation, that takes a point (x,y) and multiples it by matrix. For example, if a point pl with a value (50,100) is scaled by 50%, the result is that pl will have a value (25,50). Preferably, a selection zoom occurs when the user creates a tracking rectangle on the window by dragging the mouse with the left button down and releasing it. This rectangle tells the visual graph control the new view-port size and coordinates. Typically, the logical space of a view cannot be displayed all at once onto the physical space of a view. For example, a word processing software displays a portion of the document that a user is editing or viewing. The viewable area is called the view-port.

The drag selection unit 44 is used for selecting multiple items of a graph. The drag selection is behaviour to allow users to select multiple items, typically using amouse gesture. Preferably, the drag selection works as follows:
1. The user clicks the left mouse button down onto an empty space in the view.
2. The user drags the mouse. A tracking rectangle is displayed.
3. Once the tracking rectangle encloses all the nodes he/she wishes to select, the user does a left mouse button up. All the nodes within the bounding rectangle are selected.

The host application view controller module 33 manages an instance of a visual graph control. The host application view controller module 33 controls the lifetime of a visual graph control, handles events that are generated from the host application and the visual graph control module 31. Events may be forwarded to another module or handled by the host application view controller module 33 itself.

The host application view controller module 33 is a Finite State Machine (FSM), where events may invoke an action and change the state of the host application view controller module 33. Events can be generally categorizes as follows:

### Command Events

These are events generated from users pressing on a menu item or toolbar button. Most of these events are sent from the application framework. The host application view controller module 33 also has a task to create and register command events that are diagram-view specific. For example, inserting a Diagram Menu onto the main menu and adding a diagram-view toolbar.

### Notification Events

These events are generated from the visual graph control. The visual graph control module 31 sends several events, a sub-set of which is handled by and action taken by the host application view controller module 33. For example, assume diagram-view has focus and a node is selected. A user may presses the DELETE key on the keyboard. The visual graph control module 31 sends a notification message to the controller that a key was pressed and character was the DELETE key. The host application view controller module 33 handles the event and removes the node from the Metadata/ Engine layer of the engine and metadata module 34. Later the engine and metadata module 34 sends an event to the host application view controller module 33 informing the model has changed and all the views in the application should update itself.

### Window Events

These events are generated from a windows based operating system. Events such as creating a window, destroying a window, resize or moving a window and paint events are some of the events that the host application view controller module 33 handles.

### Application Framework Events

These events come from the application framework. The framework requires each host application view controller 33 to handle a set of events such as when to become active or when to populate the menu items.

The engine and metadata module 34 provide the application logic and semantics of the data model. The engine and metadata module 15 defines and saves the application behaviour and the application data.

The above components provide the visual behaviour to group or cluster graph elements to create a sub-graph. The data model of a graph in the diagram-view system 30 may be defined as follows, using Backus Naur Form (BNF) notation:

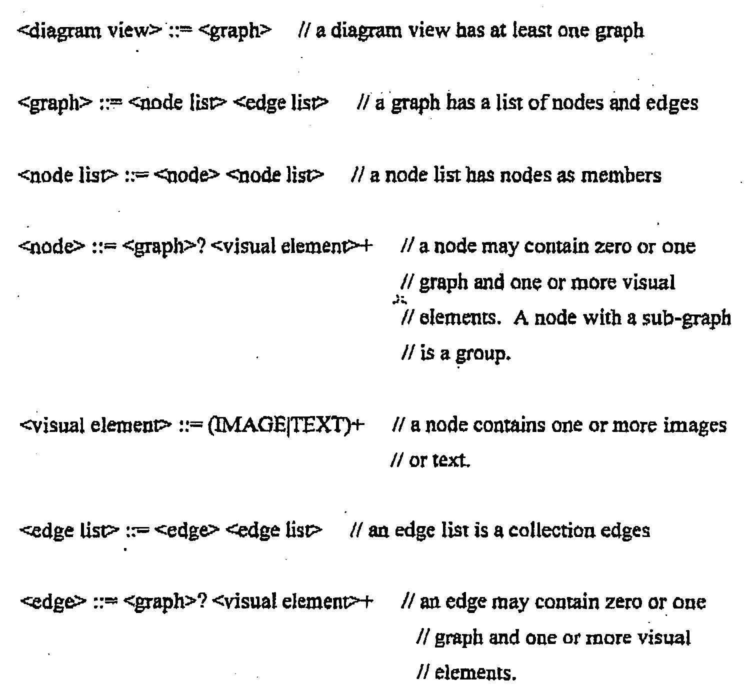

The diagram-view system 30 may be used to manipulate a graphical representation of a data model. Figure 5 shows an example of a graph 51 of a data model used by the diagram-view system 30. The graph 51 comprises six nodes 52 and six edges 53. The graph 51 may be rendered by the rendering unit 12 of the visual graph control module 31 of the diagram-view system 30 on a window 50 created by the display unit 11 on a user's computer system display. Information regarding the nodes and edges may be stored in the graph information repository 14.

Figure 5 shows a graph G having the following node set, (node_1, node_2, node_3, node_4, node_5, node_6). Let E be the edge set of G, which has the following members (e12, e13, e24, e35, e36). The notation used is "e" for edge and digits refer to the node numbers. Thus, e12 is an edge that joins node node_1 and node_2. Thus, the BNF notation of the graph G stored in a graph information repository 14 is:
G = <N,E>
N = (node_1, node_2, node_3, node_4, node_5, node_6)
E = (e12,e13,e24,e35,e36)

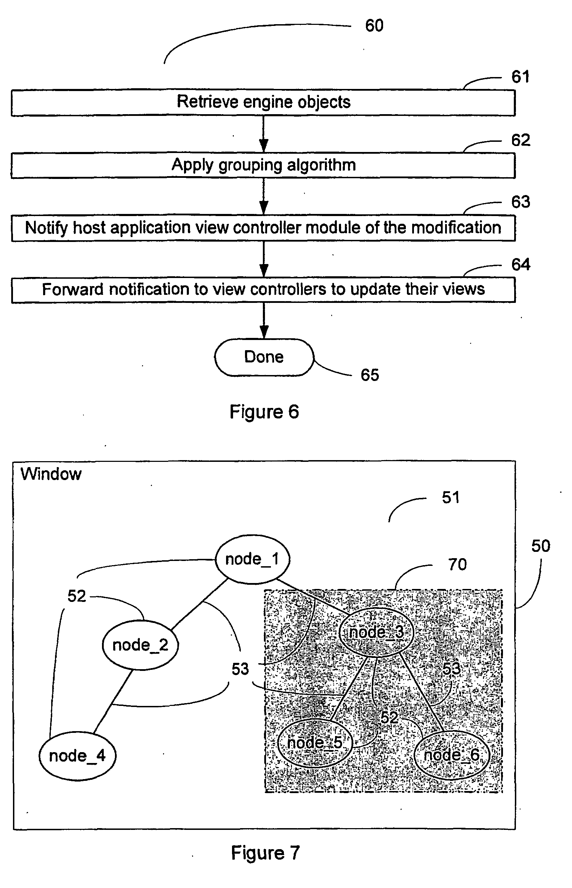

Figure 6 shows a flowchart of an example of a method of creating a group (60), in accordance with the diagram-view system 30. If a user selects node_3, node_5 and node_6, of graph G above, and invokes a typical create group operation found in a group creating unit of the visual graph control system 31, the method 60 is invoked. The method 60 begins with the grouping operation retrieving the engine objects (61) from the engine and metadata module 34 that the selected nodes represent. An example of an engine object is an object representing a relational database table. Next, the grouping operation will apply a grouping algorithm (62) defined in a metadata layer of the engine and metadata module 34. The engine and metadata module 34 will notify the host application view controller module 33 of the modification and the set of nodes that have been modified (63). Finally, the host application will forward the notification to the view controllers to update their views (64). Once the views are updated (64), the method is done (65).

Figure 7 shows the output of creating a subgroup as described in the above example. In this state, a subgraph 70 is displayed. Notice subgraph 70 is shaded where nodes and edges were selected. The graph 51 has a "cross" edge which connects node_1 and node_3. A cross-edge is an edge that has an end point located in another graph, since node_1 is member of the graph 51 and node_3 is a member of the subgraph 70.

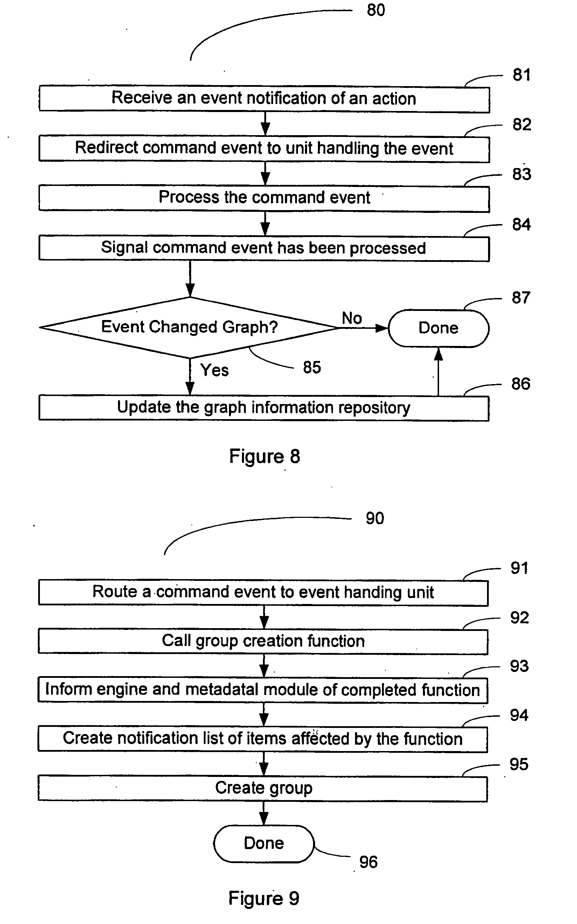

Figure 8 shows a flowchart for another method of visually grouping elements in a diagram (80), such as a graph 51, in accordance with an embodiment of the invention. The method (80) begins with receiving an event notification of an action (81) from a user working in a window of a display unit 11 of the diagram-view system 30. Such actions include selecting nodes to form a group, expanding a group, or collapsing a group. Such actions produce command events in the host application. The command event is passed to the host application view controller module 33. The host application controller module 33 redirects the command event to the unit in the diagram-view system 30 designed to handle the command event (82). The unit will process the command event (83) and signal the host application view controller module 33 when the command event has been processed. The host application view controller module 33 will inform the event notification unit 13 of the command event which has occurred to the graph 61 (84). If the event effects changes to the graph 61 (85), the host application view controller module 33 will update the graph information repository 14 accordingly (86). The method (80) is done (87).

There may be more than one view in a host application. Thus, several instances of a visual graph control may be created and used at one time.

The diagram-view system 30 may be used to select multiple nodes to create a group. Figure 9 shows a flowchart for another method of creating a group from nodes in a graph 61, in accordance with the diagram-view system 30. The user may use a mouse, or other input device, to select nodes to form a group. Before the method begins, multiple nodes are selected in the diagram-view.

The user will generate a command event either by pressing on a menu item from a main menu or from a context menu in the host application. The host application view controller module 33 routes the command event to the correct handler function to create a group (91). A group creation function in the visual graph control system 31 receives all the selected model objects as one of its input parameters and also the parent where the newly created group should be a member. This function calls engine and metadata module 34 routines to manipulate the model structure to create the group (92). For example, the function will call a routine to create a group, and then delete the selected nodes from the present parent, and recreate them in the newly created group.

Once all the operations are finished, it informs the engine and metadata module 34 that it is completed (93). The engine and metadata module 34 creates a notification list of all the items that were affected by the group creation function and sends a notification event to the host application view controller module 33 (94). The host application view controller module 33 modifies and forwards this event to all the views (each event notification unit 13 of each visual graph control instance) running in the host application. Thus, the host application view controller module 33 sends messages to create a group and insert and delete items from the visual graph control instance to create a group (95). The method is done (96).

As described above, Figure 7 shows a subgraph 70 in the graph 51, in accordance with a diagram-view system 30. The subgraph 70 comprises node_3, node_5, and node_6. The subgraph 70 also comprises the edges connecting node_3 with node_5 and node_3 with node_6. Limitations to group membership are expressed in the BNF grammar, an example of which is shown below. The visual display of subgraph 70 may be altered to display the fact that it is a group. For example, the subgraph 70 may be shaded or placed on a coloured background. Alternatively, the subgraph 70 may be outlined with a border such as a dotted line border.

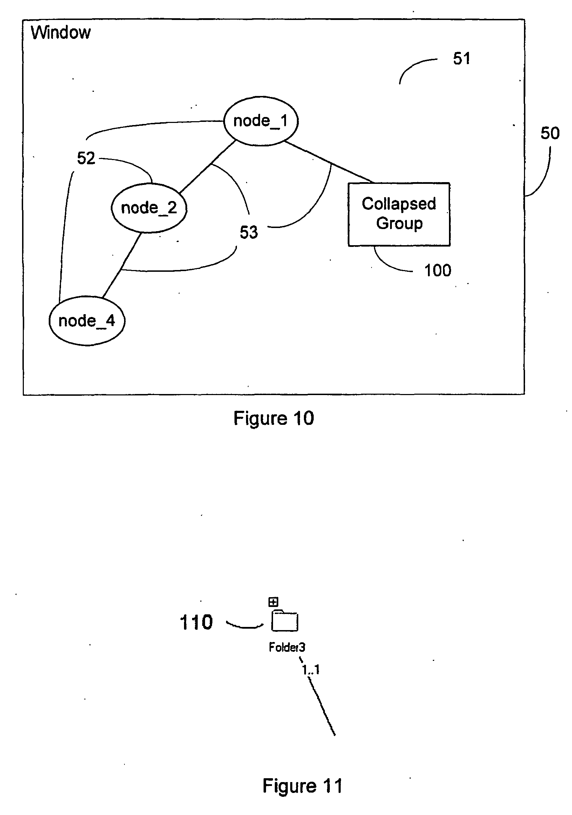

Groups may be expanded or collapsed. Figure 10 shows the graph 61 with a collapsed nodeGroup 100. In this state an image, such as an icon, is displayed at the nodeGroup 100. The collapsed nodeGroup 100 corresponds with the expanded subgraph 70 shown on Figure 7. While collapsed, a nodeGroup 100 is displayed as a single node (or collapsed nodeGroup 100). Note that the subgraph 70 and nodeGroup 100 are different images of the same underlying element.

The BNF notation for the graphs described in Figures 7 and 10 is:
<diagram-view> ::= G
G = <N,E>
N = (node_1, node_2, node_4, node_100)
E = (e12,e24,e13)
Node_100 = G70
G70 = <N,E>
N = (node_3, node_5, node_6)
E = (e3S,e36)

The host application may provide the image of a collapsed nodeGroup. For example, a folder image may be used to represent a collapsed nodeGroup 100. Figure 11 shows an example of an image from the diagram-view system 30 displaying a folder 110 that represents a collapsed nodeGroup,

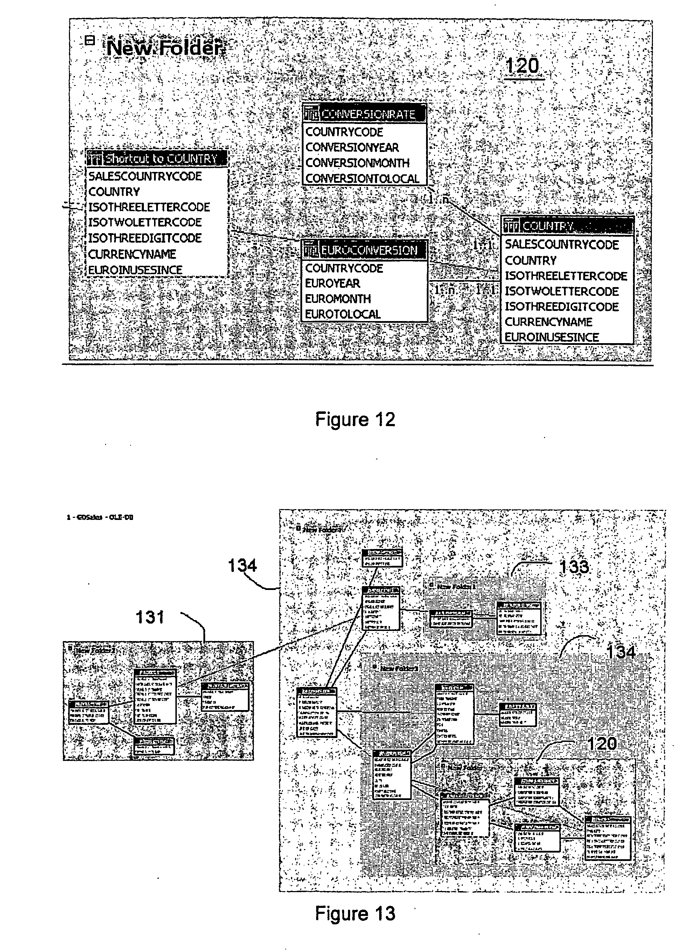

Figure 12 shows an example of an image from a host application of the diagram-view system 30 showing a nodeGraph 120 (or subgraph) that is expanded. The expanded nodeGraph 120 is associated with the collapsed group node 110. In this example, the expanded nodeGraph 120 comprises four nodes 52 and four edges 53. While expanded, a group image (or nodeGraph) 120 will display all the nodes 52 and edges 53 that are members of the nodeGraph 120 and also edges 53 whose sources are outside the group 120. The host application view controller module 33 determines the ends of a cross edge. When a group is expanded, the visual graph control module 31 will send a notification message to the host application view controller module 33 informing it that the cross edge's ends requires updating. Since the host application view controller module has access to the model, it can determine the cross edge's ends. Nodes 52 and edges 53 may be displayed onto a coloured background to indicate membership in the nodeGraph 120. Alternatively, other forms of outlining the nodeGraph 120 may be used.

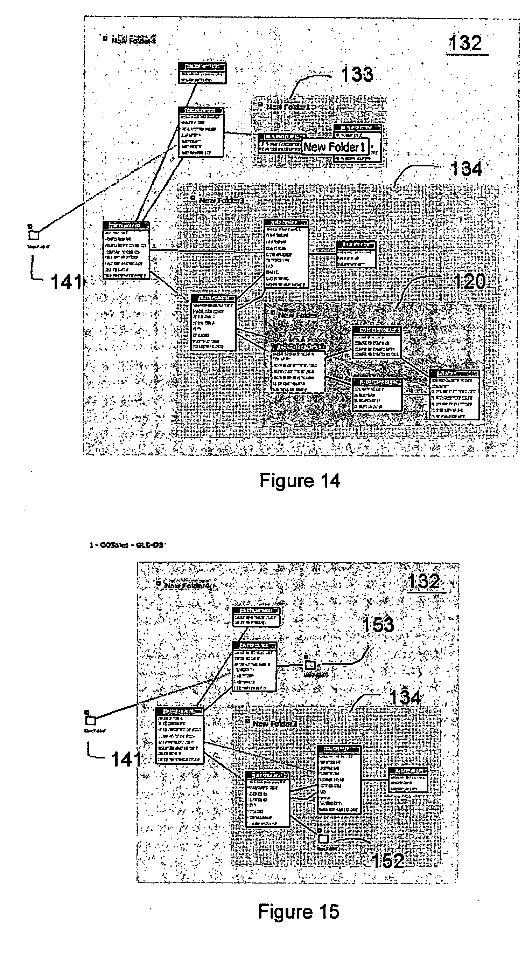

Groups can be nested in a group. The nesting is of arbitrary depth. Figure 13 shows a diagram-view image of a graph containing groups (or nadeGraphs) and nested groups (or nodeGraphs). NodeGraph 120 is nested in nodeGraph 134, which is nested in nodeGraph 132. Figure 14 shows a diagram-view image showing a graph with collapsed (or nodeGroups) and expanded (or nodeGraphs) groups. The folders represent collapsed nodeGroups. If a newly created group's parent is a group, then the newly created group (or nodeGraph) is nested. Folder 141 is associated with nodeGroup 131. Figure 15 show another example of a diagram-view image showing a graph with collapsed and expanded groups. Folder 153 is associated with nodeGroup 133. Folder 152 is associated with nodeGroup 120.

Nodes may be added or deleted to a group. A user may modify the position of one or more nodes in a group as well as modify the position of one or more groups while expanded or collapsed. The event would be the creation/deletion of a node.

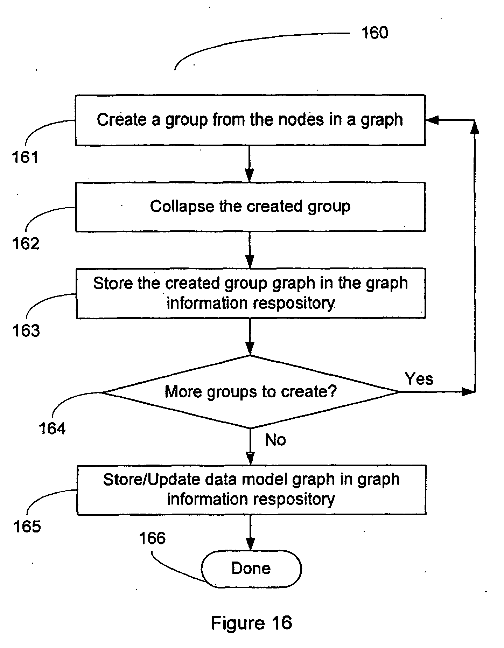

Figure 16 is a flowchart showing a method of rendering large data model topologies (160). The method (160) begins with creating a group from the nodes in the data model graph (161). The data model graph may be newly created by a user, or retrieved from the graph information repository 14. Once the group (or nodeGraph) is created (161), the group is collapsed (162). The group may be stored as a graph in the graph information repository 14 (163). The collapsed group in the large data model graph may reference the stored group information if a user selects to expand the collapsed group. If there are more groups to created (164), then steps (161) to (163) are repeated, In the creation of other groups, collapsed groups are considered as nodes. Thus, the creation of subsequent groups may also nest groups. If no more groups are to be created (164), then the remaining graph comprising nodes and/or collapsed groups, may be stored as a graph in the information repository (165). The method (160) is done (166). Advantageously, compression is enhanced by this method of rendering large data model topologies visually using a grouping mechanism that decomposes the topology into smaller graphs images.

The diagram-view systems 10, 20, 30 as well as the methods described above according to the present invention may be implemented by any hardware, software or a combination of hardware and software having the above described functions. The software code, either in its entirety or a pan thereof, may be stored in a computer readable memory. Further, a computer data signal representing the software code that may be embedded in a carrier wave may be transmitted via a communication network. Such a computer readable memory and a computer data signal are also within the scope of the present invention, as well as the hardware, software and the combination thereof.

While particular embodiments of the present invention have been shown and described, changes and modifications may be made to such embodiments without departing from the true scope of the invention.

## Claims

1. A system for displaying and modifying a graph representation of a data model, the system comprising:
a display unit for displaying a window;
a rendering unit for rendering a graph onto the window;
an event notification unit for providing notification to the window in response to an event; and
a graph information repository for storing elements of the graph and interrelation information of the elements.

2. The system as claimed in claim 1, wherein the graph information repository includes:
edges and nodes of the graph; and
the interrelation of the edges and nodes.

3. The system as claimed in claim 1, further comprising one or more of:
a multiple selection unit for selecting multiple nodes of a graph to create a group;
a drag and drop unit for dragging a selected node or group and dropping the selected node or group in another location of a window;
a zoom selection unit for expanding and collapsing groups of a graph;
a drag selection unit for dragging a selection of the graph from one location in a window to another;
a host application view control module for managing the visual graph control module; and
an engine and metadata module for providing application logic and semantics.

4. A system for displaying and modifying a graph representation of a data model, the system comprising:
a visual graph control module for providing behaviour features;
an extended visual graph control module for providing extended behaviour features;
a host application view control module for managing the visual graph control module; and
an engine and metadata module for providing application logic and semantics.

5. The system as claimed in claim 4, wherein the visual graph control module includes:
a display unit for displaying a window;
a rendering unit for rendering a graph on the window;
an event notification unit for providing notification to a parent window in response to an event; and
a graph information repository for storing lexical and syntactical information of the graph.

6. The system as claimed in claim 4, wherein the extended visual graph control module includes one or more of:
a multiple selection unit for selecting multiple nodes of a graph to create a group;
a drag and drop unit for dragging a selected node or group and dropping the selected node or group in another location of a window;
a zoom selection unit for expanding and collapsing groups of a graph; and
a drag selection unit for dragging a selection of the graph from one location in a window to another.

7. A method of rendering a data model topology, the method comprising the steps of:
creating a group of nodes in a graph of a data model topology;
storing the group as a group graph in a graph information repository; and
updating the graph of the data model topology.

8. The method of claim 7, wherein the step of creating comprises the steps of:
obtaining a selection of nodes in the graph;
associating the selection of nodes as the group graph; and
treating the group graph as a node in the data model topology graph.

9. The method of claim 7, wherein the step of updating the graph comprises the step of highlighting the group graph in the visual display of the data model topology graph.

10. The method of claim 7, wherein the step of updating the graph comprises the steps of:
collapsing the group in the data model topology; and
updating the data model topology to reference the group'graph.

11. The method of claim 10, wherein the step of collapsing comprises the steps of:
creating a group node to represent the group in the data model topology; and
replacing the group in the data model topology with the group node.

12. The method of claim 11, further comprising the step of expanding the group node into the group graph.

13. The method of claim 10, wherein the step of updating the data model topology comprises the step of updating the data model topology graph stored in a graph information repository.

14. The method of claim 7, further comprising the step of retrieving the data model topology from a graph information repository.

15. The method of claim 7, further comprising the step of displaying the data model topology graph in a visual display.

16. The method of claim 15, wherein the step of displaying comprises the step of highlighting the group graph in the visual display of the data model topology graph.

17. The method of claim 15, wherein the step of displaying comprises the steps of:
creating a group node to represent the group in the data model topology; and
replacing the group in the data model topology with the group node.

18. The method of claim 15, wherein the step of displaying comprises the step of dynamically altering the visual display of the of group in the data model topology graph, the step of dynamically altering comprising one of the steps of:
collapsing the group graph into a group node; and
expanding a group node into the group graph.

19. A computer data signal embodied in a carrier wave and representing sequences of instructions which, when executed by a processor, cause the processor to perform a method of rendering a data model topology, the method comprising steps of:
obtaining a selection of nodes in the graph;
associating the selection of nodes as the group graph; and
treating the group graph as a node in the data model topology graph.

20. A computer-readable medium having computer readable code embodied therein for use in the execution in a computer of a method of rendering a data model topology, the method comprising steps of:
obtaining a selection of nodes in the graph;
associating the selection of nodes as the group graph; and
treating the group graph as a node in the data model topology graph.

21. A computer program product for use in the execution in a computer of a system for displaying and modifying a graph representation of a data model, the computer program product comprising:
a display unit for displaying a window;
a rendering unit for rendering a graph onto the window;
an event notification unit for providing notification to the window in response to an event; and
a graph information repository for storing elements of the graph and interrelation information of the elements.
